# EUROPÄISCHE PATENTSCHRIFT

(11) **EP 0 578 017 B1**
(45) Veröffentlichungstag und Bekanntmachung des Hinweises auf die Patenterteilung: **28.02.1996**
(21) Anmeldenummer: 93109603.6
(22) Anmeldetag: 16.06.1993
(51) Int. Cl.: B29C 45/20, B29C 45/34

(54) **Spritzventil für Vakuum-Wachs-Einspritzanlage**
Injection valve for a vacuum-wax-injection molding apparatus
Valve d'injection pour un dispositif de moulage de cire par injection sous vide

(30) Priorität: 25.06.1992 DE 9208262 U
(43) Veröffentlichungstag der Anmeldung: 12.01.1994
(73) Patentinhaber: ARNO LINDNER KG, D-81379 München (DE)
(72) Erfinder: Lindner, Arno, D-8000 München 71 (DE)
(74) Vertreter: Brose, D. Karl, Dipl.-Ing.

(56) Entgegenhaltungen:
- DE-A- 3 727 640
- GB-A- 1 005 215
- US-A- 3 070 126
- PATENT ABSTRACTS OF JAPAN vol. 006, no. 157 (M-150)18. August 1982 &JP-A-57 072 766 (ARAI TAKESHI) 7. Mai 1982
- PATENT ABSTRACTS OF JAPAN vol. 014, no. 536 (M-1052)27. November 1990 & JP-A-22 27 223 (SHIN ETSU POLYMER CO LTD) 10. September 1990
- PATENT ABSTRACTS OF JAPAN vol. 10, no. 286 (M-521)(2342) 27. November 1986 & JP-A-61 104 819 (DAINICHI NIPPON CABLES LTD) 23 Mai 1986
- PATENT ABSTRACTS OF JAPAN vol. 013, no. 177 (M-818)26. April 1989 &JP-A-10 08 014 (KOMATSU LTD) 12. Januar 1989

## Beschreibung

Die vorliegende Erfindung betrifft ein Spritzventil für eine Vakuum-Wachs-Einspritzanlage gemäß dem Oberbegriff des Anspruchs 1.

Bei dem Vakuum-Wachs-Einspritzverfahren wird zur Herstellung einer Wachsform eine entsprechende Gummihohlform mit Wachs gefüllt, welches dann in der Gummiform erstarrt. Um die Bildung von Luftblasen in der Form zu verhindern, wird dabei die Gummihohlform vor dem Einspritzen des Wachses evakuiert.

Ein Spritzventil für eine solche Vakuum-Wachs-Einspritzanlage dient also zur Verbindung einer mit Wachs auszuspritzenden Form zuerst mit einem Raum mit Vakuum und sodann mit einem Raum mit flüssigem Wachs. Dieses Ventil muß eine geschlossene, eine Evakuierungs- und eine Wachsspritzstellung aufweisen. Weiterhin besitzt es ein Anschlußelement, an das die Gummihohlform angedrückt werden kann.

Bisher (GB-A-1 005 215) wurden solche Spritzventile für Vakuum-Wachs-Einspritzanlagen außerordentlich kompliziert ausgeführt. Sie wiesen üblicherweise verschiedene elektronische, mechanische oder ähnliche Komponenten auf, durch die der Spritzablauf (Form evakuieren, Vakuum unterbrechen und Wachs freigeben) ausgelöst wurden. Einfacher aufgebaute Spritzventile dieser Art waren sehr kompliziert zu bedienen, da gleichzeitig mit dem Anpressen der Gummihohlform über einen Schalthebel die verschiedenen Arbeitsgänge nacheinander ausgelöst werden mußten.

Es ist daher Aufgabe der vorliegenden Erfindung, ein sehr einfach aufgebautes Spritzventil für eine Vakuum-Wachs-Einspritzanlage zu schaffen, welches gleichzeitig außerordentlich einfach zu bedienen ist. Erfindungsgemäß wird diese Aufgabe dadurch gelöst, daß das Rohr über die mindestens eine seitliche Öffnung in Abhängigkeit von der Einschiebetiefe zuerst den Raum mit Vakuum und dann bei größerer Einschiebetiefe den Raum mit Wachs mit dem Anschlußelement verbindet.

Es ist dabei bevorzugt, dieses Spritzventil in einer Außenwand des mit flüssigem Wachs gefüllten Raumes anzubringen und in dieser Außenwand einen Kanal vorzusehen, der mit dem Vakuum in Verbindung steht. Dadurch wird verhindert, daß das Wachs aufgrund langer Fließwege erstarrt, bevor es in die Gummihohlform eindringt.

Weiter ist es bevorzugt, das Rohr mittels einer Feder im Ruhezustand in der geschlossenen Stellung zu halten.

Die Feder ist dabei vorzugsweise als Schraubenfeder ausgebildet, die um das Rohr herum zwischen Ventilgrundkörper und über den Durchmesser des Rohres hinaus überstehendem Anschlußstück angeordnet ist.

Besonders bevorzugt ist es, daß das Rohr den Ventilgrundkörper durchdringt und im Inneren des mit Wachs gefüllten Raumes ein verdicktes Ende aufweist, dessen Durchmesser größer ist als der Durchmesser, in dem das Rohr in dem Ventilgrundkörper geführt ist.

Dabei ist es besonders bevorzugt, das verdickte Ende des Rohres in Ruhestellung an dem Ventilgrundkörper anliegen zu lassen und an der Anlagestelle eine Dichtung vorzusehen. Dadurch kann sicher verhindert werden, daß flüssiges Wachs in der Ruhestellung des Ventils zwischen Rohr und Ventilkörper aussickert (zur Erhaltung der Beweglichkeit muß dazwischen etwas Luft sein).

Besonders bevorzugt ist es, eine Rastvorrichtung vorzusehen, durch die das Rohr in der Evkuierungsstellung gehalten werden kann. Dadurch wird die Bedienung des Spritzventils weiter erleichtert, da man bei den Eindrücken des Ventils genau spürt, wann die Evakuierungsstellung erreicht ist. Weiterhin ist es dadurch möglich, die Gummihohlform besonders lange mit Vakuum zu beaufschlagen und so eine möglichst perfekte Evakuierung zu erreichen.

Als Rastvorrichtung eignet sich dabei besonders eine mit einer Schraubenfeder beaufschlagte Kugel, wobei dann die Ausnehmung, mit der die Rastvorrichtung zusammenwirkt, vorzugsweise als eine um die Mantelfläche des Rohres herumlaufende Nut mit halbkreisförmigem Querschnitt ausgebildet ist.

Im folgenden soll ein Ausführungsbeispiel der vorliegenden Erfindung anhand der Zeichnungen dargestellt werden. Es zeigen:
**Fig. 1** ein erfindungsgemäßes Spritzventil für eine Vakuum-Wachs-Einspritzanlage in Schnittdarstellung in Ruhestellung (geschlossen);
**Fig. 2** das Spritzventil gemäß Fig. 1 in der Evakuierungsstellung;
**Fig. 3** das Spritzventil der Fig. 1 in der Wachs-Einspritz-Stellung.

Ein erfindungsgemäßes Spritzventil 18 für eine Vakuum-Wachs-Einspritzanlage ist in einer Außenwand 10 des Wachskessels 12 der Vakuum-Wachs-Einspritzanlage angebracht. Unterhalb des Wachskessels 12 ist bei dieser Vakuum-Wachs-Einspritzanlage der Vakuumkessel 14 angeordnet. Er steht über einem in der Außenwand 10 verlaufenden Kanal 16 mit dem erfindungsgemäßen Spritzventil 18 in Verbindung. Vorzugsweise ist das Spritzventil 18 dabei im unteren Bereich des Wachskessels 12 angebracht.

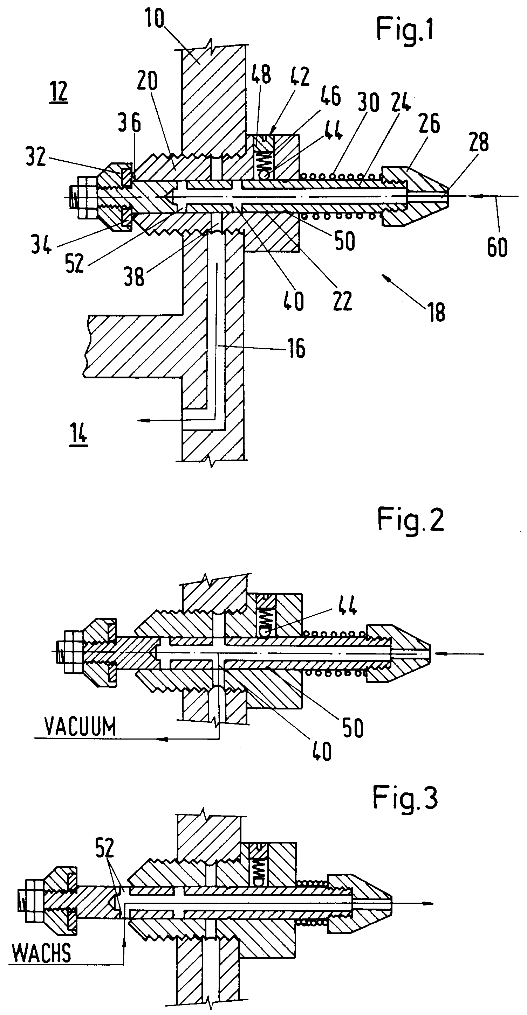

Das erfindungsgemäße Spritzventil 18 umfaßt einen Ventilgrundkörper 20, der in der Behälterwand 10 des Wachskessels 12 befestigt, vorzugsweise eingeschraubt, ist. Der Ventilgrundkörper 20 liegt mit einer Seitenfläche seines verbreiterten Außenabschnitts an der Behälterwand 10 an. Er weist eine horizontale Bohrung 22 auf, in der ein am Ende verschlossenes Rohr 24 mit passendem Außendurchmesser horizontal gleitfähig und dicht geführt ist. Dieses Rohr 24 endet in einem konisch zulaufenden Anschlußstück 26, welches auf das Rohr 24 aufgeschraubt ist, und dessen Spitze eine Öffnung 28 aufweist, die mit dem Innenraum des Rohres 24 in Verbindung steht. Dieses Anschlußstück 26 entspricht den üblichen Anschlußstücken für die in der Goldschmiedetechnik verwendeten Gummihohlformen. Zwischen der Rückseite des Anschlußstücks 26 und der Frontseite des Ventilgrundkörpers 20 ist eine Schraubenfeder 30 um das Rohr 24 herum angeordnet. Die Schraubenfeder 30 steht dabei stets unter einer Vorspannung und hält so das Rohr 24 in einer definierten Stellung (geschlossen), wie in Fig. 1 dargestellt.

Das entsprechende Gegenlager für das Rohr 24 wird durch ein an dem geschlossenen Ende des Rohres 24 aufgeschraubtes Dichtelement 32 gebildet, welches mit einer Dichtung 34 versehen ist. In der in Fig. 1 dargestellten geschlossenen Stellung wird diese Dichtung 34 mittels der Schraubenfeder 30 gegen einen am inneren Ende des Ventilgrundkörpers 20 angebrachten Ventilsitz 36 gedrückt. Dadurch wird eine sichere Abdichtung des Wachskessels 12 nach außen und gegenüber dem Ventil 18 erreicht.

Weiterhin sind in dem Ventilgrundkörper 20 Öffnungen 38 vorgesehen, über die der Vakuumkanal 16 mit dem Rohr 24 in Verbindung steht. Das Rohr 24 weist ebensolche seitliche Öffnungen 40 auf, die in der Evakuierungsstellung (siehe Fig. 2) mit den Öffnungen 38 im Ventilgrundkörper zur Deckung gelangen und auf diese Weise eine durchlässige Verbindung zwischen Vakuum und Gummihohlform herstellen.

In dem äußeren verbreiterten Abschnitt des Ventilgrundkörpers 20 ist eine Kugelraste 42 vorgesehen. Diese umfaßt eine Kugel 44, die von einer Schraubenfeder 46 auf das Rohr 24 gedrückt wird. Zur Befestigung der ganzen Kugelraste 42 und zur Vorspannung der Feder 46 ist eine Madenschraube 48 in der für die Kugelraste vorgesehenen senkrecht zu dem Rohr 24 stehenden Bohrung im Grundkörper 20 eingeschraubt.

Außerdem ist auf der äußeren Oberfläche des Rohres 24 eine umlaufende Nut 50 mit halbrundem Querschnitt vorgesehen, deren Abstand zu den Öffnungen 40 dergestalt gewählt ist, daß in der in Fig. 2 gezeigten Stellung einerseits gerade die Öffnungen 40 des Rohres 24 mit den Öffnungen 38 des Ventilgrundkörpers 20 zur Deckung kommen und gleichzeitig die Kugel 44 der Kugelraste 42 in die Nut 50 einrastet.

Nahe dem verschlossenen Ende des Rohres 24 sind weitere seitliche Öffnungen 52 in diesem Rohr vorgesehen. In der ganz eingeschobenen Stellung des Rohres 24 (wie in Fig. 3 dargestellt) sind diese Öffnungen 52 über das innere Ende 36 des Ventilgrundkörpers 20 hinaus geschoben. In dieser Stellung, die in Fig. 3 gezeigt ist, münden die Öffnungen 52 in dem mit Wachs gefüllten Raum 12 des Wachskessels. Sie erlauben damit den Durchtritt des Wachses in das Rohr 24 und durch das Anschlußstück 18 in die inzwischen evakuierte Gummihohlform.

Im folgenden soll noch der Arbeitsablauf des erfindungsgemäßen Spritzventils dargestellt werden:
Der Ruhezustand des Ventils ist in Fig. 1 dargestellt. Dabei ist sowohl der Vakuumkessel als auch der Wachskessel durch das Ventil dicht verschlossen. Zur Einleitung des Spritzvorgangs wird die Gummihohlform nun an dem Anschlußelement 26 angesetzt. Die Form wird dabei in Richtung des mit 60 gekennzeichneten Pfeiles gegen das Anschlußstück 26 gedrückt. Dadurch wird das gesamte Rohr gegen den Druck der Schraubenfeder 30 nach innen bewegt, bis die in Fig. 2 dargestellte Position erreicht ist. In dieser Position schnappt die Kugelraste 42 in der Nut 50 ein. In dieser Stellung wird nun die Luft aus der Gummihohlform evakuiert, da in dieser Stellung, wie oben beschrieben, eine durchgängige Verbindung zwischen Vakuumkessel 14 und Anschlußstück 26 besteht.

Wenn der Anpreßdruck gegen das Spritzventil weiter gesteigert wird, wird der Reibungswiderstand der Kugelraste 42 und die Federkraft der Schraubenfeder 30 überwunden, und das Rohr 24 wird ganz in den Ventilgrundkörper 20 eingeschoben, so daß die in Fig. 3 dargestellte Stellung erreicht wird. In dieser Stellung des Spritzventils wird nun das Wachs in die Form eingespritzt, da jetzt die Öffnungen 52 in den wachsgefüllten Raum 12 hineinragen. Wenn nach Beendigung der Wachseinspritzung die Gummihohlform von dem Anschlußelement 26 entfernt wird, schnellt dieses durch die Kraft der Feder 30 wieder vor und nimmt die in Fig. 1 beschriebene Position ein, so daß sowohl der Wachskessel 12 als auch der Vakuum-Kessel 14 wieder verschlossen sind. Ein Arbeitszyklus ist damit beendet.

## Patentansprüche

1. Spritzventil für Vakuum-Wachs-Einspritzanlage zur Verbindung einer mit Wachs auszuspritzenden Form mit einem Raum (14) mit Vakuum oder einem Raum (12) mit flüssigem Wachs in der Vakuum-Wachs-Einspritzanlage, mit einer geschlossenen, einer Evakuierungs- und einer Wachsspritzstellung und mit einem Ventilgrundkörper (20) und einem Anschlußelement (26), an das die Form angedrückt werden kann, wobei das Anschlußelement (26) an einem Rohr (24) befestigt ist, dessen dem Anschlußelement (26) gegenüberliegendes Ende verschlossen ist, und welches in den Ventilgrundkörper (20) einschiebbar ist, wobei das Rohr (24) mindestens eine seitliche Öffnung (48, 52) aufweist, **dadurch gekennzeichnet,** daß das Rohr (24) über die mindestens eine seitliche Öffnung (48, 52) in Abhängigkeit von der Einschiebetiefe zuerst den Raum (14) mit Vakuum und dann bei größerer Einschiebetiefe den Raum (12) mit Wachs mit dem Anschlußelement (26) verbindet.

2. Spritzventil nach Anspruch 1, **dadurch gekennzeichnet**, daß es in einer Außenwand (10) des mit flüssigem Wachs gefüllten Raumes (12) angebracht ist und über einen in dieser Außenwand (10) angebrachten Kanal (16) mit dem Raum (14) mit Vakuum in Verbindung steht.

3. Spritzventil nach Anspruch 1 oder 2, **dadurch gekennzeichnet,** daß das Rohr (24) mittels einer Feder (30) im Ruhezustand in der geschlossenen Stellung gehalten ist.

4. Spritzventil nach Anspruch 3, **dadurch gekennzeichnet**, daß die Feder (30) als Schraubenfeder ausgebildet ist, die um das Rohr (24) herum zwischen dem Ventilgrundkörper (20) und dem über dem Durchmesser des Rohres (24) überstehenden Anschlußstück (26) angeordnet ist.

5. Spritzventil nach einem der Ansprüche 2 bis 4, **dadurch gekennzeichnet**, daß das Rohr (24) den Ventilgrundkörper (20) durchdringt und im Inneren des mit Wachs gefüllten Raumes (14) ein verdicktes Ende (32) aufweist, dessen Durchmesser größer ist als der Durchmesser, in dem das Rohr (24) in dem Ventilgrundkörper (20) geführt ist.

6. Spritzventil nach Anspruch 5, **dadurch gekennzeichnet**, daß das verdickte Ende (32) des Rohres (24) in Ruhestellung an dem Ventilgrundkörper (20) anliegt und an der Anlagestelle mit einer Dichtung (34) versehen ist.

7. Spritzventil nach einem der vorhergehenden Ansprüche, **dadurch gekennzeichnet**, daß an der Außenseite des Rohres (24) eine Ausnehmung (50) vorgesehen ist, in die eine Rastvorrichtung (42) eingreift, wenn sich das Rohr (24) in der Evakuierungsstellung befindet.

8. Spritzventil nach Anspruch 7, **dadurch gekennzeichnet**, daß die Rastvorrichtung (42) aus einer mit einer Schraubenfeder (46) beaufschlagten Kugel (44) besteht, und die Ausnehmung (50) als eine ringförmige Nut ausgebildet ist.

## Claims

1. An injection valve for a vacuum wax injection installation for communicating a mold into which wax is to be injected selectively with a first space (14) for providing a vacuum and a second space (12) for providing liquid wax in the vacuum injection installation and a connecting member (26) which can be pressed to the mold, wherein the connecting member (26) is fixed on a tube (24), the end of which, which is opposed to the connecting member (26) is closed, and which is inwardly displaceable relative to the main valve body (20), the tube (24) having at least one lateral opening (48,52) characterised in that the tube (24) connects by means of the at least one lateral opening (48,52) depending on the depth of inward displacement first said first space (14) providing a vacuum and then with larger inward displacement the space (12) with the wax with the connecting member (26).

2. An injection valve according to claim 1, characterised in that it is arranged in an outer wall (10) of the space (12) containing the liquid wax and is connected with the space (14) containing vacuum by means of a channel (16) arranged in this outer wall (10).

3. An injection valve according to claim 1 or 2, characterised in that the tube (24) is biased towards the closed position by means of a spring (30).

4. Injection valve according to claim 3, characterised in that the spring (30) is a coil spring arranged around the tube (24) between the main valve body (20) and a portion of the connecting member (26) which projects outwardly beyond the tube (24).

5. An injection valve according to claim 2 to 4, characterised in that the tube (24) passes through the main valve body (20) and that it has an enlarged end portion (32) arranged inside of the space (14) filled with wax, the diameter of which is larger then the diameter, at which the tube (24) is guided in the main valve body (20).

6. Injection valve according to claim 5, characterised in that the enlarged end portion (32) of the tube (24) bears against the main valve body (20) in the closed position and that a sealing means (34) is provided on their mutual contact location.

7. An injection valve according to one of the preceeding claims, characterised in that the tube (24) has a recess (50) on its outside, in which a retaining means (42) engages, when the tube (24) is in the evacuation position.

8. An injection valve according to claim 7, characterised in that the retaining means (42) comprises a coil spring (46) loading a ball (44) towards the recess (50) which is formed as an annular groove.

## Revendications

1. Soupape d'injection pour installation d'injection de cire sous vide, destinée à relier un moule dans lequel doit être injecté de la cire avec une enceinte (14) dans laquelle règne un vide ou une enceinte (12) remplie de cire liquide de l'installation d'injection de cire sous vide, comprenant une position fermée, une position d'évacuation et une position d'injection de cire, et comportant un corps de base de soupape (20) et un élément de raccordement (26) sur lequel le moule peut être pressé, l'élément de raccordement (26) étant fixé à un tube (24) dont l'extrémité qui est à l'opposé de l'élément de raccordement (26) est fermée, et qui peut être enfoncé dans le corps de base (20) de la soupape, le tube (24) comprenant au moins une ouverture latérale (48, 52), caractérisée en ce que le tube (24), en fonction de la profondeur d'enfoncement, raccorde par ou moins une ouverture latéral (48, 52) à l'élément de raccordement (26) d'abord l'enceinte (14) dans laquelle règne un vide et ensuite, quand la profondeur d'enfoncement est plus importante, l'enceinte (12) contenant de la cire.

2. Soupape d'injection selon la revendication 1, caractérisée en ce qu'elle est montée dans une paroi extérieure (10) de l'enceinte (12) remplie de cire liquide et est liaison par une canalisation (16) constituée dans cette paroi extérieure (10) avec l'enceinte (14) où règne un vide.

3. Soupape d'injection selon la revendication 1 ou 2, caractérisée en ce que le tube (24) est maintenu à l'état de repos dans la position fermée au moyen d'un ressort (30).

4. Soupape d'injection selon la revendication 3, caractérisée en ce que le ressort (30) est constitué sous forme d'un ressort hélicoïdal qui est monté autour du tube (24) entre le corps de base (20) de la soupape et l'élément de raccordement (26) dont le diamètre est plus important que celui du tube (24).

5. Soupape d'injection selon l'une des revendications 2 à 4, caractérisée en ce que le tube (24) traverse le corps de base (20) de la soupape et comprend à l'intérieur de l'enceinte (14) remplie de cire une extrémité épaissie (32) dont le diamètre est plus important que le diamètre dans lequel le tube (24) est guidé dans le corps de base (20) de la soupape.

6. Soupape d'injection selon la revendication 5, caractérisée en ce que l'extrémité épaissie (32) du tube (24) repose, dans sa position de repos, contre le corps de base (20) de la soupape et est munie d'une garniture d'étanchéité (34) dans la position d'appui.

7. Soupape d'injection selon l'une quelconque des revendications précédentes, caractérisée en ce qu'un évidement (50) est prévu sur le côté externe du tube (24), dans lequel pénètre un dispositif d'arrêt (42) quand le tube (24) se trouve dans sa position d'évacuation.

8. Soupape d'injection selon la revendication 7, caractérisée en ce que le dispositif d'arrêt (42) est constitué par une bille (44) soumise à la sollicitation d'un ressort hélicoïdal (46) et l'évidement (50) est constitué sous la forme d'une gorge annulaire.
